# EUROPÄISCHE PATENTSCHRIFT

(11) **EP 3 824 445 B1**
(45) Veröffentlichungstag und Bekanntmachung des Hinweises auf die Patenterteilung: **07.06.2023**
(21) Anmeldenummer: 19755275.5
(22) Anmeldetag: 18.07.2019
(51) Int. Cl.: G07C 5/08, G06K 9/00

(54) **COMPUTERGESTÜTZTES VERFAHREN ZUM ANALYSIEREN PERSONENBEZOGENER UNFALLDATEN**
COMPUTER-SUPPORTED METHOD FOR ANALYZING OF PERSONAL ACCIDENT DATA
PROCÉDÉ ASSISTÉ PAR ORDINATEUR PERMETTANT D'ANALYSER DES DONNÉES D'ACCIDENT À CARACTÈRE PERSONNEL

(30) Priorität: 20.07.2018 EP 18184771
(43) Veröffentlichungstag der Anmeldung: 26.05.2021
(73) Patentinhaber: Bono, Caroline, 8634 Hombrechtikon (CH); Rothenbühler, Rudolf, 8634 Hombrechtikon (CH)
(72) Erfinder: Bono, Caroline, 8634 Hombrechtikon (CH); Rothenbühler, Rudolf, 8634 Hombrechtikon (CH)
(74) Vertreter: Schirbach, Marcel
(86) Internationale Anmeldenummer: PCT/CH2019/000021
(87) Internationale Veröffentlichungsnummer: WO 2020/014795

(56) Entgegenhaltungen:
- DE-A1- 19 846 422
- DE-A1-102005 027 252
- US-A1- 2016 001 781
- US-A1- 2017 291 611
- US-A1- 2018 050 696
- US-B1- 6 757 009

## Beschreibung

Die vorliegende Erfindung betrifft ein computergestütztes Verfahren zum Analysieren personenbezogener Unfalldaten eines oder mehreren Fahrzeuginsassen, sowie eine Vorrichtung zum computergestützten Analysieren personenbezogener Unfalldaten eines oder mehreren Fahrzeuginsassen.

Durch einen Verkehrsunfall kann ein Fahrzeugfahrer oder weitere Fahrzeuginsassen verschiedene Verletzungen davontragen. Besonders verletzungsanfällig sind bei einem Unfall, insbesondere auch einem Auffahrunfall, die Halswirbelsäule (aufgrund einer plötzlichen und unvorhergesehenen Bewegung des Kopfes gegenüber des fixierten Rumpfes), der Kopf selber sowie Thorax, aber auch der Rumpf und die Extremitäten. Die verschiedenen Schleuderbewegungen des Kopfes gegenüber dem Rumpf während des Unfalls beim Halten des Sicherheitsgurtes erfolgen beispielsweise innerhalb eines sehr kurzen Zeitraums im Bereich weniger Hundert Millisekunden. Die daraus resultierenden Verletzungen bzw. medizinischen Symptome werden als Schleudertrauma (auch HWS-Distorsion oder Peitschenhiebsyndrom) bezeichnet und können in ihrer Schwere von überdehnten Bändern bis hin zu Wirbelbrüchen oder tödlichen Verletzungen reichen.

Ungünstige Aufprallwinkel können aber auch dazu führen, dass die Haltefunktion des Sicherheitsgurtes versagt mit der Folge unbegrenzter Polytraumata, was dann bildlich nachgewiesen werden kann. Die meisten der auftretenden Verletzungen sind jedoch in herkömmlichen bildgebenden medizinischen Verfahren, z.B. in der Röntgendiagnostik, nicht bzw. nur schwer darstellbar, was u.a. eine medizinische Diagnose und die Beweisführung bei Leistungsforderungen an Versicherungen aufgrund von Langzeitschaden erschweren kann.

Andererseits ist bei manchen Verletzungen jedoch eine zeitnahe und auf die jeweilige Verletzung abgestimmte medizinische Behandlung wichtig, um eine möglichst gute Genesung des Patienten gewährleisten und mögliche Spätfolgen verhindern oder zumindest verringern zu können.

In der US 6 757 009 B1 ist ein Kraftfahrzeugkontrollsystem offenbart, welches ein Kamerapaar zur Erzeugung eines ersten und zweiten Bildes eines Fahrgastbereichs umfasst. Ein Abstandsprozessor bestimmt die Abstände von zwischen einem ersten Bild und einem zweiten Bild verschobenen Objekts, wobei mittels einer Abstandsanalyse, die Bewegung des Objekts und die Geschwindigkeit dieser Bewegung bestimmbar ist. Die Abstandsinformation kann auch dazu verwendet werden, vordefinierte Muster in den Bildern zu erkennen und so das Objekt zu identifizieren.

Aus der US 2016/001781 A1 ist ein Verfahren zur Steuerung von Fahrzeugsystemen bekannt, umfassend den Empfang von Überwachungsinformationen von einem oder mehreren Überwachungssystemen und die Bestimmung einer Vielzahl von Fahrerzuständen auf der Grundlage der Überwachungsinformationen von dem einen oder den mehreren Überwachungssystemen.

Die EP3561779 beschreibt ein System und ein Verfahren zur Erfassung personenbezogener Unfalldaten in einem Fahrzeug. Dabei werden während eines Unfalls eines Fahrzeugs, beispielsweise ein KFZ, durch eine Hochgeschwindigkeitskamera Bilddaten des oder der Fahrzeuginsassen erfasst und gespeichert. Die Bilddaten können dann dazu verwendet werden, das Unfallgeschehen aus medizinischer Sicht zu analysieren und erlauben es somit, Rückschlüsse auf mögliche Verletzungen des Fahrzeuginsassen zu ziehen.

Die Aufgabe der vorliegenden Erfindung besteht darin, ein alternatives bzw. verbessertes computergestütztes Verfahren zum Analysieren personenbezogener Unfalldaten bzw. eine Vorrichtung zum computergestützten Analysieren personenbezogener Unfalldaten eines oder mehreren Fahrzeuginsassen bereitzustellen.

Die Aufgabe wird gelöst durch ein computergestütztes Verfahren zum Analysieren personenbezogener Unfalldaten eines oder mehreren Fahrzeuginsassen gemäß Anspruch 1, eine Vorrichtung zum computergestützten Analysieren personenbezogener Unfalldaten eines oder mehreren Fahrzeuginsassen gemäß Anspruch 8 und ein Unfallassistenzsystem gemäß Anspruch 9. Dabei können die Vorrichtungen auch durch die untenstehenden bzw. in den Unteransprüchen ausgeführten Merkmale des Verfahrens weitergebildet sein oder umgekehrt bzw. können die untenstehenden bzw. in den Unteransprüchen ausgeführten Merkmale der Vorrichtungen auch untereinander zur Weiterbildung genutzt werden.

Ein erfindungsgemäßes computergestütztes Verfahren dient zum Analysieren personenbezogener Unfalldaten eines oder mehreren Fahrzeuginsassen, wobei die personenbezogenen Unfalldaten zumindest Bilddaten einer Videosequenz des Fahrzeuginsassen während eines Unfalls umfassen. Das Verfahren umfasst zumindest einen ersten Schritt des Erkennens eines Musters anhand der Bilddaten und zumindest einen zweiten Schritt des Vergleichens des erkannten Musters mit einer Anzahl vorab hinterlegter Muster, vorzugsweise einer Mehrzahl vorab hinterlegter Muster.

Unter "Anzahl* ist im Rahmen der vorliegenden Anmeldung stets "ein oder mehrere" zu verstehen, während der Begriff "Mehrzahl* mehrere, d. h. mehr als eins bezeichnet.

Als "Muster" bzw. "Unfallmuster" werden hier Merkmale verstanden, die den Bilddaten extrahiert wurden und den Unfallhergang in Bezug auf den Fahrzeuginsassen charakterisieren. Derartige Merkmale können insbesondere kinematische Daten sein.

Die Videosequenz umfasst dabei vorzugsweise eine ausreichende Anzahl Bilder, d. h. eine ausreichende Datenmenge an Bilddaten, um daraus wie unten beschrieben ein Muster erkennen zu können. Hierzu kann die Videosequenz beispielsweise mittels einer Hochgeschwindigkeitskamera bereitgestellt sein, wobei die Hochgeschwindigkeitskamera dazu ausgebildet ist, eine große Anzahl an Bildern pro Sekunde (frames per second, kurz: fps) aufzunehmen, beispielsweise mindestens 700 fps oder mindestens 1000 fps. Die Videosequenz umfasst dabei vorzugsweise eine ausreichend lange Aufnahmedauer, um den gesamten Bewegungsablauf eines oder mehreren Fahrzeuginsassen während des Unfallvorgangs und gegebenenfalls einer kurzen Zeitdauer vor und/oder während dem Unfallvorgang zu erfassen. Beispielsweise kann die Videosequenz einer Aufnahmedauer von 10 oder 15 Sekunden entsprechen.

Ein Ergebnis des in dem zweiten Schritt durchgeführten Vergleichs kann beispielsweise sein, dass das erkannte Muster einem der vorab hinterlegten Muster entspricht, wobei die vorab hinterlegten Muster insbesondere auf in vorhergehenden Unfallvorgängen erfasste Bilddaten basieren können. In diesem Fall, d. h. bei einer Übereinstimmung der Muster, können weitere Informationen bereitgestellt werden, die aus den vorhergehenden Unfällen ermittelt wurden. Somit ist es beispielsweise möglich, Erfahrungswerte wie z. B. auftretende Verletzungen aus vorhergehenden Unfällen zu nutzen. Da die Erkennung des Musters und der Vergleich des Musters automatisch erfolgen, können bessere Ergebnisse erzielt werden, als dies bei einer manuellen Analyse der Fall wäre, z. B. wenn ein Ersthelfer und/oder behandelnder Arzt die bereitgestellte Videosequenz lediglich visuell und ohne Computerunterstützung analysiert.

Auch kann das ermittelte Muster beispielsweise zur besseren Beweisführung bei Leistungsforderung an Versicherungen, z. B. aufgrund von Langzeitschäden, dienen.

Die Übereinstimmung eines vorab hinterlegten und eines ermittelten Musters muss dabei nicht eine hundertprozentige Übereinstimmung sein. Es kann sich hierbei auch lediglich um eine teilweise Übereinstimmung handeln, beispielsweise innerhalb eines vorab festgelegten Konfidenzintervalls wie z. B. 95% oder 90%. Auch kann die Vergleichseinheit beispielsweise dazu ausgebildet sein, ein Muster zu erkennen, welches jeweils teilweise mit zwei vorab bereitgestellten Mustern übereinstimmt und eine eventuelle Daten- oder Informationsausgabe entsprechend dieser beiden vorab bereitgestellten Muster bereitzustellen.

Vorzugsweise umfasst ein erkanntes und/oder vorab hinterlegtes Muster einen Bewegungsablauf des Fahrzeuginsassen während des Unfalls, insbesondere eine zeitliche Abfolge von Beschleunigungsvorgängen eines Kopfes und/oder eines Halses und/oder eines Thorax und/oder eines Rumpfes und/oder Extremitäten des Fahrzeuginsassen und/oder eine zeitliche Abfolge von Auslenkungen eines Kopfes und/oder eines Halses und/oder eines Rumpfes und/oder eines Thorax und/oder Extremitäten des Fahrzeuginsassen.

Ein derartiger Bewegungsablauf ist durch eine zeitliche Abfolge der Einzelbilder der Videosequenz gegeben, wobei die Einzelbilder ausgewertet und zu einem entsprechenden Bewegungsablauf zusammengesetzt werden. Dieser Bewegungsablauf kann sich beispielsweise auf einzelne oder mehrere Körperteile des Fahrzeuginsassen (wie z. B. Kopf, Hals, Thorax, Rumpf und/oder Extremitäten) oder auch auf Relativbewegungen einzelner oder mehrere Körperteile zueinander beziehen. Die Einzelbilder können somit z. B. hinsichtlich der entsprechenden Position des jeweiligen Körperteils ausgewertet werden.

Unter einer Beschleunigung bzw. einem Beschleunigungsvorgang sind im Rahmen der vorliegenden Anmeldung sowohl positive, d. h. die Geschwindigkeit erhöhende, als auch negative, d. h. abbremsende, Beschleunigungen bzw. Beschleunigungsvorgänge zu verstehen.

Da unfallbedingte Verletzungen im Wesentlichen durch einen oder mehrere derartige Bewegungsabläufe verursacht wird bzw. werden, kann ein solches Muster, das auf einen Bewegungsablauf basiert bzw. diesen umfasst, ein guter Indikator für auftretende Verletzungen sein. Das automatische Auswerten der Bilddaten, d. h. das Erkennen eines Musters aus den Bilddaten, kann somit beispielsweise ermöglichen, noch vor einer Erstuntersuchung oder begleitend zu dieser eine Einschätzung möglicher Verletzungen zu erhalten. Dadurch kann beispielsweise eine Erstbehandlung möglichst gut auf die Verletzung(en) abgestimmt werden und/oder die Gefahr, Verletzungen zu übersehen kann verringert werden und/oder die Verletzungen bzw. die verschiedenen Körperregionen können zeitlich entsprechend der Schwere der (erwarteten) Verletzungen behandelt bzw. untersucht werden. Somit ist es allgemein beispielsweise möglich, eine bessere medizinische (Erst-)Versorgung des Verunfallten bereitzustellen.

Vorzugsweise sind den vorab hinterlegten Mustern jeweils medizinische Diagnosedaten zugeordnet und das Verfahren umfasst weiter einen dritten Schritt des Ausgebens von medizinischen Diagnosedaten, die dem erkannten Muster zugeordnet sind. Weiter bevorzugt umfassen die medizinischen Diagnosedaten zumindest eine medizinische Diagnose und/oder eine Information über medizinische Spätfolgen und/oder die medizinischen Diagnosedaten umfassen einen Indikatorwert, der den Grad einer möglichen Schwere einer Verletzung des Fahrzeuginsassen angibt. Mit derartigen medizinischen Diagnosedaten ist es beispielsweise möglich, auf einfache Art und Weise mögliche Verletzungen des Fahrzeuginsassen insbesondere vorab, d. h. vor einer Erstuntersuchung, erkennen und/oder einschätzen zu können. Beispielsweise kann der Indikatorwert, der den Wert einer Verletzungsschwere angibt, für verschiedene Körperregionen und/oder Körperteile bereitgestellt werden und eine zeitliche Reihenfolge der Behandlung der Verletzungen des Verunfallten anhand der jeweiligen Indikatorwerte festgelegt werden. Durch das Verfahren können Diagnosedaten rasch und möglichst zeitnah bereitgestellt werden. Dies kann insbesondere bei lebensgefährlichen Verletzungen entscheidend sein. Des Weiteren können die medizinischen Diagnosedaten beispielsweise unterstützend zu herkömmlichen medizinischen Diagnoseverfahren, insbesondere bildgebenden medizinischen Verfahren wie z. B. einer Röntgenuntersuchung, verwendet werden, um eine medizinische Diagnose beispielsweise zu erleichtern und/oder zu verbessern.

Vorzugsweise umfassen die personenbezogenen Unfalldaten weiter physikalische Betriebsdaten des Fahrzeugs, z. B. dessen Geschwindigkeit und/oder Beschleunigung, unmittelbar vor und/oder während des Unfalls. Damit ist es beispielsweise möglich, diese zusätzlich zu den Bilddaten zum Erkennen eines Musters heranzuziehen.

Vorzugsweise wird das erfindungsgemäße Verfahren unter Verwendung eines Algorithmus zum Implementieren maschinellen Lernens durchgeführt, wobei der Algorithmus weiter bevorzugt dazu geeignet ist, vorab anhand eines bereitgestellten Satzes von personenbezogenen Unfalldaten eine Anzahl von Mustern aus den Bilddaten zu erkennen, welche als vorab hinterlegte Muster gespeichert werden.

Unter maschinellem Lernen wird hier im Allgemeinen die Generierung von Wissen (in diesem Fall das Extrahieren gewisser Muster aus den personenbezogenen Unfalldaten, insbesondere den Bilddaten, und gegebenenfalls in Verbindung mit medizinischen Diagnosedaten) aus Erfahrung (d. h. aus vorangegangenen Unfällen) verstanden. Prinzipiell ist der Algorithmus dazu ausgebildet, aus Beispielen, d. h. vorangegangenen Unfällen, zu lernen, also entsprechende Muster zu extrahieren und dann unbekannte personenbezogene Unfalldaten, insbesondere Bilddaten, zu beurteilen.

Zum Erlernen der Muster, welche dann als vorab bereitgestellte Muster hinterlegt sind, wird dem Algorithmus vorzugsweise vorab ein Satz personenbezogenen Unfalldaten (d. h. einer Mehrzahl personenbezogener Unfalldaten), insbesondere Bilddaten, aus vorhergehenden Unfällen bereitgestellt, insbesondere in Verbindung mit entsprechenden medizinischen Diagnosedaten. Nach dieser Lernphase ist der Algorithmus dann in der Lage, ein oben beschriebenes Verfahren zumindest teilweise durchzuführen, insbesondere ein Muster aus den bereitgestellten personenbezogenen Unfalldaten zu erkennen und dieses beispielsweise einer bestimmten Verletzung und/oder Verletzungskategorie zuzuordnen. Beispielsweise können verschiedene Verletzungen in Verletzungskategorien gruppiert sein.

Mit einem derartigen Algorithmus zum Implementieren maschinellen Lernens ist es beispielsweise möglich, ein oben beschriebenes Verfahren zumindest teilweise automatisch auszuführen. Dabei kann insbesondere eine große Anzahl an Daten (vorab bereitgestellter personenbezogener Unfalldaten aus vorhergegangenen Unfällen) bereitgestellt sein, auf deren Basis die vorab bereitgestellten Muster ermittelt werden. Zudem kann beispielsweise bei einem auftretenden Unfall ein entsprechendes Muster schnell und auf einfache Art und Weise ermittelt werden.

Vorzugsweise sind die vorab hinterlegten Muster in einer Unfalldatenbank gespeichert. Dadurch ist es einerseits beispielsweise möglich, einen Zugriff auf die vorab hinterlegten Muster zu ermöglichen. Andererseits ermöglicht es eine derartige Datenbank beispielsweise, diese gegebenenfalls zu aktualisieren und/oder zu erweitern, beispielsweise durch Hinterlegen zusätzlicher bzw. neu ermittelte Muster und/oder durch Hinzufügen weiterer medizinischer Diagnosedaten. Insbesondere kann der oben erwähnte Algorithmus zum Implementieren maschinellen Lernens dazu ausgebildet sein, ein neues erkanntes Muster in der Datenbank zu hinterlegen.

Eine erfindungsgemäße Vorrichtung dient zum computergestützten Analysieren personenbezogener Unfalldaten eines oder mehreren Fahrzeuginsassen, wobei die personenbezogenen Unfalldaten zumindest Bilddaten einer Videosequenz des Fahrzeuginsassen während eines Unfalls umfassen. Die Vorrichtung umfasst eine Erkennungseinheit zum Erkennen eines Musters anhand der Bilddaten und eine Vergleichseinheit zum Vergleichen des erkannten Musters mit einer Anzahl vorab hinterlegter Muster. Vorzugsweise umfasst die Vorrichtung weiter eine Ausgabeeinheit zum Ausgeben von medizinischen Diagnosedaten, die dem erkannten Muster zugeordnet sind. Damit ist es beispielsweise möglich, die oben in Bezug auf das computergestützte Verfahren beschriebenen Wirkungen auch mit einer derartigen Vorrichtung zu erzielen.

Ein erfindungsgemäßes Unfallassistenzsystem umfasst eine oben beschriebene Vorrichtung zum computergestützten Analysieren personenbezogener Unfalldaten und eine Hochgeschwindigkeitskamera zum Erfassen von Bilddaten einer Videosequenz des Fahrzeuginsassen während eines Unfalls und einen Datenspeicher, vorzugsweise einen Ringspeicher, zum Speichern der von der Hochgeschwindigkeitskamera erfassten Bilddaten. Vorzugsweise umfasst das Unfallassistenzsystem weiter eine Betriebsdatenerfassungseinheit zum Erfassen physikalischer Betriebsdaten eines Fahrzeugs. Damit ist beispielsweise möglich, schneller Informationen über eine mögliche Verletzung des Fahrzeuginsassen bereitzustellen.

Weitere Merkmale und Zweckmäßigkeiten der Erfindung ergeben sich aus der Beschreibung von Ausführungsbeispielen anhand der beigefügten Zeichnungen.
Fig.1 ist eine schematische Ansicht eines Fahrzeugs mit einem System zur Erfassung personenbezogener Unfalldaten, welches mit einer Vorrichtung zum computergestützten Analysieren personenbezogener Unfalldaten in Verbindung steht,
Fig. 2 ist eine schematische Ansicht einer Vorrichtung zum computergestützten Analysieren personenbezogener Unfalldaten gemäß einer Ausführungsform der vorliegenden Erfindung und
Fig. 3 zeigt schematisch ein Verfahren zum Analysieren personenbezogener Unfalldaten gemäß der vorliegenden Erfindung.

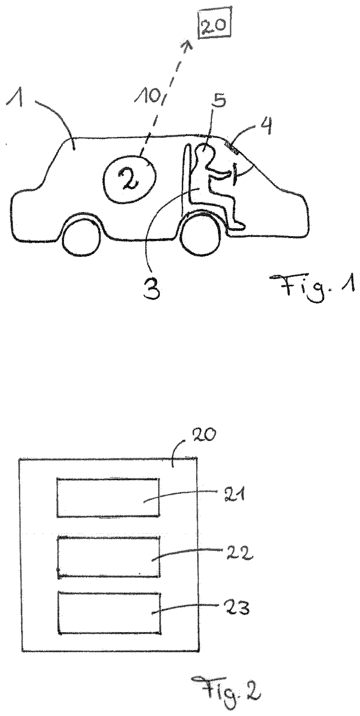

Fig. 1 zeigt ein Fahrzeug 1 mit einem Fahrzeuginsassen 3 und einem schematisch gezeigten fahrzeuginternen System 2 zur Erfassung personenbezogener Unfalldaten, welches über eine Datenverbindung mit einer erfindungsgemäßen Vorrichtung 20 zum computergestützten Analysieren personenbezogener Unfalldaten in Verbindung steht. Das in Fig. 1 beispielhaft gezeigte Fahrzeug 1 ist ein KFZ, es kann jedoch auch beispielsweise als ein Nutzfahrzeug ausgebildet sein.

Das fahrzeuginterne System 2 zur Erfassung personenbezogener Unfalldaten umfasst zumindest eine als eine Hochgeschwindigkeitskamera 4 ausgebildete Kamera zum Erfassen von Bilddaten, einen nicht näher gezeigten als Ringspeicher ausgebildeten Datenspeicher zur Datenspeicherung und eine nicht näher gezeigten Übermittlungseinheit zum Übermitteln der in dem Ringspeicher gespeicherten Daten an die Vorrichtung 20. Optional umfasst das System 2 noch eine Betriebsdatenerfassungseinheit (nicht gezeigt) zum Erfassen physikalischer Betriebsdaten des Fahrzeugs 1.

Die Hochgeschwindigkeitskamera 4 des Systems 2 ist so ausgebildet und in dem Fahrzeug 1 angeordnet, dass sie dazu geeignet ist, einen Bereich des Fahrzeuginnenraums zu erfassen, in dem sich der Fahrzeuginsasse 3 befindet, d. h. eine Videosequenz in Form von Bildern des Fahrzeuginsassen 3 aufzunehmen. Dabei muss die Hochgeschwindigkeitskamera 4 nicht den gesamten Körper des Fahrzeuginsassen 3 erfassen, es ist vielmehr ausreichend, einen oberen Abschnitt dessen Körpers, insbesondere den Kopf 5, den Hals und den Oberkörper und/oder Schulterbereich, zu erfassen. Vorzugsweise erfasst die Kamera auch distalere Körperbereiche.

Die Hochgeschwindigkeitskamera 4 weist eine hohe Aufnahmegeschwindigkeit, beispielsweise von mindestens 700 fps, vorzugsweise mindestens 1000 fps auf. Die Bilder der Videosequenz werden von der Hochgeschwindigkeitskamera 4 als digitale Bilddaten erfasst.

Die Hochgeschwindigkeitskamera 4 steht über eine Datenverbindung, beispielsweise ein Datenkabel, in Verbindung mit dem Ringspeicher. Der Ringspeicher ist dazu geeignet, die von der Hochgeschwindigkeitskamera 4 erfassten Bilddaten 20 in digitaler Form zu speichern. Alternativ kann der Ringspeicher auch ein interner Speicher der Hochgeschwindigkeitskamera 4 sein.

Ein Ringspeicher ist ein digitaler Speicher mit vorgegebener Größe bzw. Speicherkapazität, in dem Daten, im vorliegenden Fall u.a. die von der Hochgeschwindigkeitskamera erfassten Bilddaten, kontinuierlich gespeichert werden. Ist die maximale Größe des Ringspeichers erreicht und der Ringspeicher voll, so wird das jeweils älteste gespeicherte Element überschrieben, sodass die Daten in einer Schleife, auch Loop genannt, gespeichert werden. Daher ist die graphische Darstellung des Speichers eine Ringform. Der Ringspeicher kann beispielsweise durch eine geeignete Software implementiert sein, mittels der das Speichern und Auslesen von Daten in einem digitalen Speicher entsprechend gesteuert wird. Vorzugsweise ist die Größe des Ringspeichers bzw. dessen Speicherkapazität ausreichend, um während eines Zeitintervalls von mehreren Sekunden, beispielsweise 10 s oder 20 s, die von der Hochgeschwindigkeitskamera aufgenommenen Bilder und eventuell zu speichernder physikalischer Betriebsdaten des Fahrzeugs zu speichern, bevor diese wieder überschrieben werden.

Die optionale Betriebsdatenerfassungseinheit steht vorzugsweise ebenfalls über eine Datenverbindung, beispielsweise ein Datenkabel, mit dem Ringspeicher in Verbindung zum Speichern von der Betriebsdatenerfassungseinheit erfasster physikalischer Betriebsdaten des Fahrzeugs 1 in dem Ringspeicher. Die Betriebsdatenerfassungseinheit kann beispielsweise als ein Geschwindigkeitssensor und/oder als ein Positionssensor, beispielsweise als GPS, und/oder als ein Beschleunigungssensor ausgebildet sein zum Erfassen einer momentanen Geschwindigkeit bzw. Position bzw. Beschleunigung des Fahrzeugs 1 als Betriebsdaten.

Weiter steht der Ringspeicher über eine Datenverbindung, beispielsweise ein Datenkabel, in Verbindung mit der Übermittlungseinheit des Systems 2. Die Übermittlungseinheit ist dazu geeignet, die in dem Ringspeicher gespeicherten Bilddaten sowie optional die Betriebsdaten als personenbezogene Unfalldaten 10 mittels eines kabellosen Übermittlungsverfahrens an die Vorrichtung 20 vorzugsweise verschlüsselt zu übermitteln. Hierzu weist die Übermittlungseinheit eine nicht gezeigte Datenschnittstelle auf.

Das System 2 kann noch weitere nicht näher beschriebene Komponenten umfassen, wie z. B. eine Steuereinheit zum Steuern der einzelnen Komponenten des Systems 2, einen Sensor zum Feststellen eines Unfalls, eine Beleuchtungsvorrichtung zum Beleuchten des Fahrzeuginnenraums, eine Analyseeinheit zum Analysieren von Daten und/oder weitere Datenspeicher.

Im Betrieb des Systems 2 filmt die Hochgeschwindigkeitskamera 4 während der Fahrt des Fahrzeugs 1 kontinuierlich den Fahrzeuginsassen 3, d. h. sie erfasst Bilddaten von dem Fahrzeuginsassen 3, und übermittelt diese an den Ringspeicher. Optional werden gleichzeitig durch die Betriebsdatenerfassungseinheit vorzugsweise kontinuierlich Betriebsdaten des Fahrzeugs 1 erfasst und ebenfalls an den Ringspeicher übermittelt. Solange kein Unfall eintritt, werden die in dem Ringspeicher gespeicherten Daten jeweils nach einem gewissen Aufnahmezeitraum, der u. A. von der Aufnahmekapazität des Ringspeichers abhängt, wieder durch neue Daten überschrieben. Bei einem Unfall wird diese kontinuierliche Datenspeicherung unterbrochen, so dass die in dem Ringspeicher vorliegenden Daten nicht mehr überschrieben werden. Somit liegen nach Beenden der Datenspeicherung Bilddaten und optional physikalische Betriebsdaten in dem Ringspeicher von einem Zeitraum vor, in dem der Unfall erfolgte. Diese werden dann als personenbezogene Unfalldaten 10 von der Übermittlungseinheit an die Vorrichtung 20 zum Analysieren personenbezogener Unfalldaten übermittelt. Alternativ können die personenbezogenen Unfalldaten auch an eine andere externe Stelle übermittelt werden, beispielsweise an eine Rettungsleitzentrale und/oder eine weitere medizinische Einrichtung und/oder einen fahrzeugexterner Datenspeicher, beispielsweise ein externer Server oder eine Cloud, und von dieser externen Stelle zur Verwendung in der Vorrichtung 20 bereitgestellt werden. Die Übermittlung der personenbezogenen Unfalldaten 10 erfolgt dabei kabellos, beispielsweise per Funk, insbesondere Mobilfunk, oder Internet, und kann beispielsweise zusammen mit einem elektronisch abgesetzten Notruf (ein sogenannter eCall) erfolgen. Vorzugsweise erfolgt das Übermitteln der personenbezogenen Unfalldaten 10 in verschlüsselter Form, beispielsweise mittels OpenPGP, wobei die personenbezogenen Unfalldaten 10 von der Übermittlungseinheit mittels eines öffentlichen, von der Vorrichtung 20 bzw. der externen Stelle generierten Schlüssels verschlüsselt werden und nur durch den entsprechenden geheimen (privaten) Schlüssel der Vorrichtung 20 bzw. der externen Stelle wieder entschlüsselbar sind.

Alternativ kann die Vorrichtung 20 zum computergestützten Analysieren personenbezogener Unfalldaten in einem mobilen Gerät (in den Figuren nicht gezeigt) implementiert sein, welches ein Ersthelfer mit sich führt und beispielsweise über eine Datenverbindung, insbesondere ein Datenkabel, an die Übermittlungseinheit angeschlossen werden kann. Das mobile Gerät zusammen mit dem fahrzeuginternen System 2 ist ein Beispiel eines Unfallassistenzsystems. Dieses dient dem zeitnahen Erkennen möglicher Verletzungen des Fahrzeuginsassen.

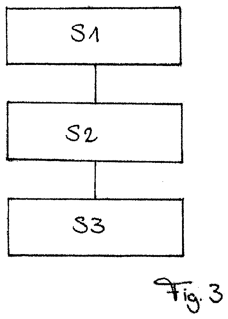

Die in Fig. 2 schematisch gezeigte Vorrichtung 20 zum computergestützten Analysieren personenbezogener Unfalldaten umfasst zumindest eine Erkennungseinheit 21, eine Vergleichseinheit 22 und eine Ausgabeeinheit 23. Der Betrieb der Vorrichtung 20 zum computergestützten Analysieren personenbezogener Unfalldaten wird im Folgenden mit Bezug auf Fig. 3 beschrieben.

In einem ersten Schritt S1 (s. Fig. 3) eines erfindungsgemäßen computergestützten Verfahrens zum Analysieren personenbezogener Unfalldaten erkennt die Erkennungseinheit 21 aus den Bilddaten der personenbezogenen Unfalldaten 10 ein Muster M(x). Optional kann die Erkennungseinheit zusätzlich zu den Bilddaten die physikalischen Betriebsdaten des Fahrzeugs 1 zum Erkennen des Musters M(x) verwenden.

Ein Muster M beschreibt allgemein einen oder mehrere Bewegungsabläufe des Fahrzeuginsassen 3 während des Unfalls. Beispielsweise kann ein Muster eine Beschleunigung bzw. eine zeitliche Abfolge von Beschleunigungen zumindest eines Körperabschnitts des Fahrzeuginsassen 3 umfassen. Alternativ oder zusätzlich kann ein Muster eine zeitliche Abfolge von relativen und/oder absoluten Auslenkungen zumindest eines Körperabschnitts des Fahrzeuginsassen 3 umfassen. Ein derartiger Körperabschnitt kann insbesondere der Kopf 5 und/oder der Hals und/oder der Thorax und/oder der Rumpf und/oder eine Extremität, z. B. ein Arm, des Fahrzeuginsassen 3 sein. Insbesondere können dabei auch relative Auslenkungen und/oder Beschleunigungen verschiedener Körperteile in Relation zueinander betrachtet werden, also beispielsweise eine relative Auslenkung des Kopfes 5 in Bezug auf den Schulterbereich oder Oberkörper des Fahrzeuginsassen 3. Optional kann ein Muster noch die physikalischen Betriebsdaten, beispielsweise die Beschleunigung und/oder Geschwindigkeit, des Fahrzeugs unmittelbar vor und/oder während des Unfalls umfassen.

Anschließend vergleicht die Vergleichseinheit 22 in einem zweiten Schritt S2 das von der Erkennungseinheit erkannte Muster M(x) mit einer Anzahl von vorab hinterlegten Mustern M(1) bis M(n). Die vorab hinterlegten Muster können dabei beispielsweise in einer Datenbank gespeichert sein, wobei die Datenbank ein interner Speicher der Vorrichtung 20 sein kann, oder die Vergleichseinheit 22 greift auf eine vorrichtungsexterne Datenbank (auch als Unfalldatenbank bezeichnet) zu. Ein Ergebnis des Vergleichs kann dabei sein, dass das erkannte Muster M(x) einem der vorab hinterlegten Muster M(1) bis M(n) entspricht, oder dass das erkannte Muster M(x) keinem der vorab hinterlegten Muster entspricht.

Beispielsweise kann die Datenbank eine Anzahl von n Mustern M(1) bis M(n) umfassen, wobei n eine natürliche Zahl größer oder gleich 1 ist (n ≥ 1). Vorzugsweise umfasst die Datenbank mehrere Muster M(1) bis M(n), d. h. mehr als ein Muster, also n > 1. Bei den Mustern M(1) bis M(n) handelt es sich vorzugsweise um verschiedene Muster.

Vorzugsweise sind in der Datenbank weiter medizinische Diagnosedaten D(1) bis D(p) gespeichert (bzw. Sätze medizinischer Diagnosedaten), wobei p ebenfalls eine natürliche Zahl größer oder gleich 1 ist (p ≥ 1). Vorzugsweise entspricht die Anzahl p der medizinischen Diagnosedaten D(1) bis D(p) der Anzahl n der vorab in der Datenbank hinterlegten Muster (d. h. p = n), wobei jedem der n Muster M(1) bis M(n) genau ein Satz medizinischer Diagnosedaten D(1) bis D(p) zugeordnet.

Ein Satz medizinischer Diagnosedaten D(i) (1≤i≤p) umfasst zumindest eine medizinische Diagnose und/oder eine Information über medizinische Spätfolgen. Die medizinischen Diagnosedaten, d. h. die medizinische Diagnose und/oder die Information über medizinische Spätfolgen beziehen sich dabei auf Informationen, die aus einem vorhergehenden Unfall eines insbesondere anderen Fahrzeuginsassen gewonnen wurden, bei dem das Muster M(i) erkannt wurde, dem der Satz medizinischer Diagnosedaten D(i) zugeordnet ist.

Die medizinischen Diagnosedaten umfassen dabei Informationen über die Art und/oder Schwere der Verletzungen des Fahrzeuginsassen. Dabei können nicht nur unmittelbar nach dem Unfall festgestellte Verletzungen berücksichtigt sein, sondern auch erst im Nachhinein, d. h. Tage, Wochen oder sogar Monate nach dem Unfall auftretende Beeinträchtigungen (Spätfolgen).

Alternativ oder zusätzlich kann einem Satz medizinischer Diagnosedaten D(i) eine Schwere der Verletzungen zugeordnet sein. Hierzu können die Verletzungen beispielsweise als leicht, mittel, schwer, sehr schwer oder lebensbedrohlich klassifiziert sein und ein entsprechender Indikatorwert (z. B. "leicht" oder "mittel" oder "schwer" oder "sehr schwer" oder "lebensbedrohlich" oder gemäß einer Skala von 1 (leicht ) bis 5 (lebensbedrohlich)) in den medizinischen Diagnosedaten D(i) hinterlegt sein.

Für den Fall, dass in dem Schritt S2 der Vergleich des erkannten Musters M(x) mit den vorab hinterlegten Mustern M(1) bis M(n) ergibt, dass das erkannte Muster M(x) einem der vorab hinterlegten Muster entspricht, d. h. M(x) = M(j) mit 1≤j≤n, gibt die Ausgabeeinheit 23 (s. Fig. 2) in dem Schritt S3 (s. Fig. 3) die dem diesen Muster entsprechenden Diagnosedaten D(j) und/oder das Muster M(j) selbst aus.

Zum Speichern der vorab hinterlegten Muster und der zugehörigen medizinischen Diagnosedaten in eine Datenbank kann beispielsweise folgendermaßen vorgegangen werden: Es werden jeweils Paare von personenbezogenen Unfalldaten und den diesen zugeordneten medizinischen Diagnosedaten bereitgestellt. Die personenbezogenen Unfalldaten und medizinischen Diagnosedaten können beispielsweise aus vorhergehenden Unfällen ermittelte Daten sein. Mittels eines geeigneten Algorithmus werden aus den Bilddaten, gegebenenfalls in Verbindung mit den physikalischen Betriebsdaten des Fahrzeugs und/oder den medizinischen Diagnosedaten, entsprechende Muster erkannt. Vorzugsweise basiert der Algorithmus auf einer Methode des maschinellen Lernens, d. h. er ist dazu geeignet, selbstständig und lediglich anhand der bereitgestellten Daten entsprechende Muster aus den Daten zu erkennen.

Jedes so erkannte Muster wird dann als ein vorab hinterlegtes Muster mit den entsprechenden medizinischen Diagnosedaten in der Datenbank oder in einem anderen Datenspeicher abgespeichert.

Für den Fall, dass in dem Schritt S2 der Vergleich des erkannten Musters M(x) mit den vorab hinterlegten Mustern M(1) bis M(n) ergibt, dass das erkannte Muster M(x) keinem der vorab hinterlegten Muster entspricht, ist die Ausgabeeinheit vorzugsweise dazu ausgebildet, eine entsprechende Information, beispielsweise in Form eines Textes und/oder eines optischen oder akustischen Signals auszugeben. Alternativ oder zusätzlich kann die Ausgabeeinheit auch das erkannte Muster M(x) selbst ausgeben.

Optional kann das erkannte Muster M(x), welches keinem der vorab hinterlegten Muster M(1) bis M(n) entspricht, dann ebenfalls in der Datenbank hinterlegt, d. h. gespeichert, werden und bei Vorliegen von entsprechenden Diagnosedaten, die beispielsweise eine Erst- und/oder Folgediagnose und/oder Informationen über Spätfolgen umfassen, können diese dann im Nachhinein dem neu hinterlegten Muster M(x) zugeordnet und in Verbindung mit diesem in der Datenbank abgespeichert werden.

## Patentansprüche

1. Computergestütztes Verfahren zum Analysieren personenbezogener Unfalldaten (10) eines oder mehreren Fahrzeuginsassen (3), wobei
die personenbezogenen Unfalldaten (10) zumindest Bilddaten einer Videosequenz des Fahrzeuginsassen (3) während eines Unfalls umfassen,
wobei das Verfahren einen ersten Schritt (S1) des Erkennens eines Musters (M(x)) anhand der Bilddaten umfasst und
einen zweiten Schritt (S2) des Vergleichens des erkannten Musters (M(x)) mit einer Anzahl vorab hinterlegter Muster (M(1)...M(n)) umfasst, wobei dieses erkannte Muster (M(x)) einen Bewegungsablauf des Fahrzeuginsassen (3) während des Unfalls umfasst, **dadurch gekennzeichnet, dass**
das erkannte und das vorab hinterlegte Muster eine zeitliche Abfolge von Beschleunigungsvorgängen eines Kopfes (5) und/oder eines Halses und/oder eines Thorax und/oder eines Rumpfes und/oder Extremitäten des Fahrzeuginsassen (3) und/oder eine zeitliche Abfolge von Auslenkungen eines Kopfes (5) und/oder eines Halses und/oder eines Rumpfes und/oder eines Thorax und/oder von Extremitäten des Fahrzeuginsassen (3) umfasst, wobei den vorab hinterlegten Mustern (M(1)...M(n)) jeweils medizinische Diagnosedaten (D(1)...D(p)) zugeordnet sind und das Verfahren weiter einen dritten Schritt (S3) des Ausgebens von medizinischen Diagnosedaten (D(j)) umfasst, die dem erkannten Muster (M(j)) zugeordnet werden.

2. Computergestütztes Verfahren nach Anspruch 1, wobei die medizinischen Diagnosedaten (D(1)...D(p)) zumindest eine medizinische Diagnose und/oder eine Information über medizinische Spätfolgen umfassen.

3. Computergestütztes Verfahren nach Anspruch 1 oder 2, wobei die medizinischen Diagnosedaten (D(1)...D(p)) einen Indikatorwert umfassen, der den Grad einer möglichen Schwere einer Verletzung des Fahrzeuginsassen (3) angibt.

4. Computergestütztes Verfahren nach einem der Ansprüche 1 bis 3, wobei die personenbezogenen Unfalldaten (10) weiter physikalische Betriebsdaten des Fahrzeugs unmittelbar vor und/oder während des Unfalls umfassen.

5. Computergestütztes Verfahren nach einem der Ansprüche 1 bis 4, welches unter Verwendung eines Algorithmus zum Implementieren maschinellen Lernens durchgeführt wird.

6. Computergestütztes Verfahren nach Anspruch 5, wobei der Algorithmus dazu geeignet ist, vorab anhand eines bereitgestellten Satzes von personenbezogenen Unfalldaten (10) eine Anzahl von Mustern aus den Bilddaten zu erkennen, welche als vorab hinterlegte Muster (M(1)...M(n)) gespeichert werden.

7. Computergestütztes Verfahren nach einem der Ansprüche 1 bis 6, wobei die vorab hinterlegten Muster (M(1)...M(n)) in einer Unfalldatenbank gespeichert sind.

8. Vorrichtung zum computergestützten Analysieren personenbezogener Unfalldaten (10) eines oder mehreren Fahrzeuginsassen (3), wobei die personenbezogenen Unfalldaten (10) zumindest Bilddaten einer Videosequenz des Fahrzeuginsassen (3) während eines Unfalls umfassen, wobei die Vorrichtung (20) umfasst:
eine Erkennungseinheit (21) zum Erkennen eines Musters (M(x)) anhand der Bilddaten,
eine Vergleichseinheit (22) zum Vergleichen des erkannten Musters (M(x)), welches einen Bewegungsablauf des Fahrzeuginsassen (3) während des Unfalls umfasst, mit einer Anzahl vorab hinterlegter Muster (M(1)...M(n)), **dadurch gekennzeichnet,**
**dass** das erkannte und das vorab hinterlegte Muster eine zeitliche Abfolge von Beschleunigungsvorgängen eines Kopfes (5) und/oder eines Halses und/oder eines Thorax und/oder eines Rumpfes und/oder Extremitäten des Fahrzeuginsassen (3) und/oder eine zeitliche Abfolge von Auslenkungen eines Kopfes (5) und/oder eines Halses und/oder eines Rumpfes und/oder eines Thorax und/oder von Extremitäten des Fahrzeuginsassen (3) umfasst, wobei den vorab hinterlegten Mustern (M(1)...M(n)) jeweils medizinische Diagnosedaten (D(1)...D(p)) zugeordnet sind und die Vorrichtung ferner eine Ausgabeeinheit für medizinische Diagnosedaten (D(j)) umfasst, die dem erkannten Muster (M(j)) zugeordnet sind.

9. Unfallassistenzsystem, umfassend eine Vorrichtung nach Anspruch 8 und eine Hochgeschwindigkeitskamera zum Erfassen von Bilddaten einer Videosequenz des Fahrzeuginsassen (3) während eines Unfalls und einen Datenspeicher, vorzugsweise einen Ringspeicher, zum Speichern der von der Hochgeschwindigkeitskamera erfassten Bilddaten.

10. Unfallassistenzsystem nach Anspruch 9, weiter umfassend eine Betriebsdatenerfassungseinheit zum Erfassen physikalischer Betriebsdaten eines Fahrzeugs (1).

## Claims

1. Computer-operated method for analysing personal accident data (10) of one or more vehicle occupants (3), wherein
the personal accident data (10) comprises at least image data of a video sequence of the vehicle occupant (3) during an accident,
wherein the method comprises a first step (S1) of recognising a pattern (M(x)) using the image data, and
comprises a second step (S2) of comparing the recognised pattern (M(x)) with a number of previously stored patterns (M(1)...M(n)), wherein this recognised pattern (M(x)) comprises a motion sequence of the vehicle passenger (3) during the accident, **characterised in that**
the recognised pattern and the previously stored pattern comprise a temporal sequence of acceleration processes of a head (5) and/or a neck and/or a thorax and/or a torso and/or extremities of the vehicle passenger (3), and/or a temporal sequence of deviations of a head (5) and/or a neck and/or a torso and/or a thorax and/or extremities of the vehicle passenger (3), wherein medical diagnostic data (D(1)...D(p)) is allocated respectively to the previously stored patterns (M(1)...M(n)), and the method further comprises a third step (S3) of issuing medical diagnostic data (D(j)) that is allocated to the recognised pattern (M(j)).

2. Computer-operated method according to claim 1, wherein the medical diagnostic data (D(1)...D(p)) comprises at least one medical diagnosis and/or piece of information relating to long-term medical consequences.

3. Computer-operated method according to claim 1 or 2, wherein the medical diagnostic data (D(1)...D(p)) comprises an indicator value that specifies the potential degree of severity of an injury to the vehicle passenger (3).

4. Computer-operated method according to one of claims 1 to 3, wherein the personal accident data (10) comprises further physical operating data of the vehicle immediately before and/or during the accident.

5. Computer-operated method according to one of claims 1 to 4, which is carried out using an algorithm for implementing machine learning.

6. Computer-operated method according to claim 5, wherein the algorithm is, using a provided set of personal accident data (10), capable of recognising a number of patterns from the image data that are saved as previously stored patterns (M(1)...M(n)).

7. Computer-operated method according to one of claims 1 to 6, wherein the previously stored patterns (M(1)...M(n)) are saved in an accident database.

8. Device for the computer-operated analysis of personal accident data (10) of one or more vehicle passengers (3), wherein the personal accident data (10) comprises at least image data of a video sequence of the vehicle occupant (3) during an accident, wherein the device (20) comprises:
a recognition unit (21) for recognising a pattern (M(x)) using the image data,
a comparison unit (22) for comparing the recognised pattern (M(x)) that comprises a motion sequence of the vehicle passenger (3) during the accident with a number of previously stored patterns (M(1)...M(n)), **characterised in that**
the recognised pattern and the previously stored pattern comprise a temporal sequence of acceleration processes of a head (5) and/or a neck and/or a thorax and/or a torso and/or extremities of the vehicle passenger (3), and/or a temporal sequence of deviations of a head (5) and/or a neck and/or a torso and/or a thorax and/or extremities of the vehicle passenger (3), wherein medical diagnostic data (D(1)...D(p)) is allocated respectively to the previously stored patterns (M(1)...M(n)), and the device further comprises an issuing unit for medical diagnostic data (D(j)) allocated to the recognised pattern (M(j)).

9. Accident assistance system, comprising a device according to claim 8 and a high-speed camera for recording image data of a video sequence of the vehicle passenger (3) during an accident, and a memory, preferably a ring memory, for saving the image data recorded by the high-speed camera.

10. Accident assistance system according to claim 9, further comprising an operating data recording unit for recording physical operating data of a vehicle (1).

## Revendications

1. Procédé assisté par ordinateur permettant d'analyser des données d'accident (10) concernant des personnes d'un ou de plusieurs passagers (3) de véhicule, dans lequel
les données d'accident (10) concernant des personnes comprennent au moins des données d'images d'une séquence vidéo des passagers (3) de véhicule pendant un accident,
le procédé comprenant une première étape (S1) de reconnaissance d'un modèle (M(x)) à l'aide des données d'images, et
une deuxième étape (S2) comprend la comparaison du modèle (M(x)) reconnu avec un certain nombre de modèles (M(1)... M(n)) enregistrés au préalable, où ce modèle (M(x)) reconnu comprend un comportement de déplacement du passager (3) de véhicule pendant l'accident, **caractérisé en ce que**
le modèle reconnu et le modèle enregistré au préalable comprennent une séquence dans le temps de processus d'accélération de la tête (5), et/ou du cou, et/ou du thorax, et/ou du tronc, et/ou des extrémités du passager (3) de véhicule, et/ou une séquence dans le temps de déviations de la tête (5), et/ou du cou, et/ou du tronc, et/ou du thorax, et/ou des extrémités du passager (3) de véhicule, où respectivement des données de diagnostic médical (D(1)...D(p)) sont associées aux modèles (M(1)...M(n)) enregistrés au préalable, et le procédé comprend en outre une troisième étape (S3) de délivrance de données de diagnostic médical (D(j)) qui sont associées au modèle (M(j)) reconnu.

2. Procédé assisté par ordinateur selon la revendication 1, dans lequel les données de diagnostic médical (D(1)...D(p)) comprennent au moins un diagnostic médical et/ou une information concernant des séquelles médicales.

3. Procédé assisté par ordinateur selon la revendication 1 ou la revendication 2, dans lequel les données de diagnostic médical (D(1)...D(p)) comprennent une valeur indicatrice, qui indique le degré de sévérité possible d'une blessure du passager (3) de véhicule.

4. Procédé assisté par ordinateur selon l'une des revendications 1 à 3, dans lequel les données d'accident (10) concernant des personnes comprennent en outre des données d'état de fonctionnement physiques du véhicule immédiatement avant et/ou pendant l'accident.

5. Procédé assisté par ordinateur selon l'une des revendications 1 à 4, lequel est exécuté moyennant l'emploi d'un algorithme pour la mise en oeuvre par apprentissage machine.

6. Procédé assisté par ordinateur selon la revendication 5, dans lequel l'algorithme est conçu pour reconnaître, tout d'abord à l'aide d'un ensemble de données d'accident (10) concernant des personnes mis à disposition, un certain nombre de modèles à partir des données d'images, lesquels sont consignés sous forme de modèles (M(1)...M(n)) enregistrés au préalable.

7. Procédé assisté par ordinateur selon l'une des revendications 1 à 6, dans lequel les modèles (M(1)...M(n)) enregistrés au préalable sont enregistrés dans une bibliothèque de données d'accident.

8. Dispositif d'analyse assisté par ordinateur de données d'accident (10) concernant des personnes d'un ou de plusieurs passagers (3) de véhicule, dans lequel les données d'accident (10) concernant des personnes comprennent au moins des données d'images d'une séquence vidéo du passager (3) de véhicule pendant un accident, le dispositif (20) comprenant :
une unité de reconnaissance (21) permettant de reconnaître un modèle (M(x)) à l'aide des données d'images,
une unité de comparaison (22) permettant de comparer le modèle (M(x)) reconnu, lequel comprend un processus de déplacement du passager (3) de véhicule pendant l'accident, avec un certain nombre de modèles (M(1)...M(n)) enregistrés au préalable, **caractérisé en ce**
**que** le modèle reconnu et le modèle consigné préalablement comprennent une séquence dans le temps de processus d'accélération de la tête (5), et/ou du cou, et/ou du thorax, et/ou du tronc, et/ou des extrémités du passager (3) de véhicule, et/ou une séquence dans le temps de déviations de la tête (5), et/ou du cou, et/ou du tronc, et/ou du thorax, et/ou des extrémités du passager (3) de véhicule, où respectivement des données de diagnostic médical (D(1)...D(p)) sont associées aux modèles (M(1)...M(n)) enregistrés au préalable, et le dispositif comprend en outre une unité de délivrance pour des données de diagnostic médical (D(j)) qui sont associées au modèle (M(j)) reconnu.

9. Système d'assistance en cas d'accident comprenant un dispositif selon la revendication 8 et une caméra ultra rapide pour la saisie de données d'images d'une séquence vidéo du passager (3) de véhicule pendant l'accident et une mémoire de données, de préférence une mémoire circulaire, pour l'enregistrement des données d'images saisies par la caméra ultra rapide.

10. Système d'assistance en cas d'accident selon la revendication 9, comprenant en outre une unité de détection de données d'état de fonctionnement pour la détection de données d'état de fonctionnement physiques d'un véhicule (1).
